# FASCICULE DE BREVET EUROPEEN

(11) **EP 2 962 030 B1**
(45) Date de publication et mention de la délivrance du brevet: **31.10.2018**
(21) Numéro de dépôt: 14729028.2
(22) Date de dépôt: 28.02.2014
(51) Int. Cl.: F16L 3/18, F16L 57/06, F16F 3/087, F16F 15/08

(54) **DISPOSITIF DE PROTECTION DE PIÈCES MÉCANIQUES**
VORRICHTUNG ZUM SCHUTZ VON MECHANISCHEN TEILEN
DEVICE FOR PROTECTING MECHANICAL PARTS

(30) Priorité: 28.02.2013 FR 1351807
(43) Date de publication de la demande: 06.01.2016
(73) Titulaire: 3X Engineering, 9800 Monaco (MC)
(72) Inventeur: BOULET D'AURIA, Stanislas, F-98000 (FR)
(74) Mandataire: Bonneau, Florence
(86) Numéro de dépôt international: PCT/FR2014/000049
(87) Numéro de publication internationale: WO 2014/131955

(56) Documents cités:
- FR-A1- 2 822 218
- FR-A1- 2 926 347
- US-A- 3 692 619
- US-A- 5 069 255
- US-A- 5 556 062
- US-B2- 6 821 638

## Description

### DOMAINE TECHNIQUE DE L'INVENTION

La présente invention concerne un dispositif de protection de pièces mécaniques susceptibles de subir un effort, un frottement ou des vibrations. Elle s'applique, en particulier, à la protection contre la dégradation, notamment due à la corrosion des vannes et des canalisations, en appui, à l'endroit de leur appui.

### ETAT DE LA TECHNIQUE

Il est connu de disposer, entre deux pièces mécaniques destinées à être en appui dont on veut limiter la corrosion, une demi coquille en matériau composite dont la forme de la surface est adaptée à la forme de l'une des pièces. Par exemple, pour protéger un tuyau cylindrique à base circulaire, on positionne, entre ce tuyau et un support, une demi coquille de forme cylindrique de diamètre interne égal au diamètre externe du tuyau.

Ces systèmes à demi coquilles présentent de nombreux inconvénients. Tout d'abord, ils imposent pour chaque diamètre de tuyau, de disposer d'une demi coquille correspondante.

On connaît aussi la solution qui consiste à placer un morceau d'élastomère ou thermoplastique entre les pièces sur la zone de contact. Cependant, cette matière est rapidement écrasée et rendue inefficiente.

En outre, le document US5069255 décrit un dispositif de protection isolant destiné à supporter un tuyau à l'intérieur d'un tubage métallique (le CASING). Le dispositif comprend un ensemble de patins reliés à une courroie, les patins supportent le tuyau et empêchent sa surface externe d'entrer en contact avec la surface interne du tubage métallique.

Le document US 3692619 A2 divulgue un élément de support pour conduites, protégeant de la corrosion, qui comprend une bande souple et des patins de renfort.

Ces documents correspondent au préambule de la revendication 1.

### OBJET DE L'INVENTION

La présente invention vise à remédier à tout ou partie de ces inconvénients.

La présente invention a donc pour objet un dispositif de protection contre la dégradation, notamment la corrosion, d'une pièce mécanique en appui sur un support, ou sous pression due notamment au poids, un tel dispositif comprenant une zone souple adaptée pour être en contact direct avec la pièce mécanique et au moins une rangée de patins rectiligne adaptée pour être en contact direct avec le support, la rangée de patins comportant une pluralité de patins solidarisés à la zone souple et plus rigides que la zone souple.

Grâce à ce dispositif, en solidarisant la zone souple à l'une des pièces, on dispose une protection mécanique entre ces pièces. Le dispositif assure aussi une absorption des vibrations mécaniques entre les pièces protégées. Ainsi, pour différents diamètres de tuyaux, le même dispositif de protection peut être utilisé, ce qui réduit aussi les besoins de stockage et de magasinage. De plus, la souplesse du dispositif, au moins dans une direction, limite le besoin d'égalisation, de polissage ou d'ajustement de la surface des pièces. Le dispositif objet de la présente invention limite ainsi la corrosion entre les pièces protégées. Le dispositif objet de la présente invention assure au moins la même protection qu'une demi coquille, sans en avoir les inconvénients et possède une durée de vie bien supérieure à celle des enrobages en matière élastomère. De plus, on peut aisément prévoir des dispositifs adaptés à différents diamètres ou tailles de pièces et différents efforts mécaniques à supporter, par exemple différents poids. De plus, ce dispositif peut servir d'entretoise pour les pièces qui ne sont pas disposées assez proches entre elles pour être en appui direct, par exemple dans le cas d'une succession de supports le long d'un tuyau, lorsque l'un des supports est à une hauteur inférieure à celle des deux autres supports

Dans des modes de réalisation, la pièce mécanique (22) est une canalisation.

Dans des modes de réalisation, les patins sont de forme rectangulaire.

Dans des modes de réalisation, les patins ont une largeur comprise entre 20 mm et 30 mm et une longueur comprise entre 10 mm et 30 mm.

Dans des modes de réalisation l'intervalle entre deux patins est compris entre la moitié de leur longueur et une fois leur largeur.

Dans des modes de réalisation, la zone souple comporte au moins une couche tissée.

Grâce à ces dispositions, le dispositif bénéficie de l'homogénéité et de la résistance propres aux tissus.

Dans des modes de réalisation, au moins une partie de la pluralité de patins est en matière plastique.

Grâce à ces dispositions, la rigidité des patins est très élevée. La matière plastique dont sont constituées les patins assure une isolation électrique, voire thermique, entre les pièces. De plus, les patins absorbent ainsi différentes vibrations entre les pièces qu'ils séparent

Dans des modes de réalisation, au moins une partie de la pluralité de patins comporte deux matériaux combinés, l'un desdits matériaux étant plus souple que l'autre.

Cette combinaison est, par exemple, un tissage ou une superposition. Grâce à chacune de ces dispositions, ces baquettes présentent une meilleure capacité d'absorption des vibrations et des chocs.

Dans des modes de réalisation, le matériau le plus souple est entouré par le matériau le plus rigide.

Grâce à ces dispositions, le dispositif peut d'appliquer à des pièces non cylindriques ou franchir des irrégularités de surface de pièces cylindriques, par exemple des soudures formant des excroissances sur des tuyaux. Le dispositif est alors souple dans deux directions orthogonales.

Dans des modes de réalisation, le matériau le plus rigide du polysulfure de phénylène (P.P.S.).

Dans des modes de réalisation, la zone souple et les patins sont formés de la même matière homogène.

Par exemple, la zone souple et les patins sont réalisés à partir d'un bloc de matériau unique et homogène. Ce bloc en une seule matière peut être mis en forme pour constituer la zone souple et les patins, par usinage, moulage, injection ou extrusion, par exemple. Par exemple, la zone souple présente une épaisseur inférieure ou égale à un millimètre afin d'avoir la souplesse nécessaire.

### BREVE DESCRIPTION DES FIGURES

D'autres avantages, buts et caractéristiques particulières de la présente invention ressortiront de la description qui suit faite, dans un but explicatif et nullement limitatif, en regard des dessins annexés, dans lesquels :
la figure 1 représente, schématiquement et en coupe, le mode de réalisation du dispositif objet de la présente invention placé entre une canalisation à protéger et un support ;
la figure 2 représente, schématiquement et en perspective, le mode de réalisation préférentiel du dispositif objet de la présente invention ; la figure 3 montre un dispositif de protection hors du cadre de l'invention ; et
les figures 4 et 5 représentent des coupes de patins de différents modes de réalisation du dispositif objet de la présente invention.

### DESCRIPTION DETAILLEE DE L'INVENTION

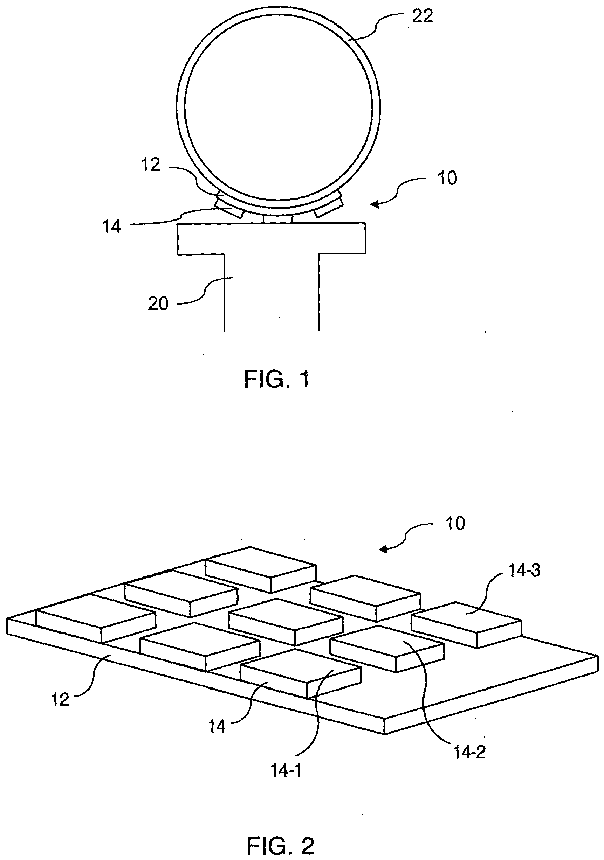

Comme illustré sur la figure 1, le dispositif de protection 10 selon l'invention est positionné entre deux pièces 20 et 22 dont on veut limiter la corrosion, l'usure ou les vibrations. Par exemple, la pièce 20 est un support placé dans une plate-forme ou sur le fond marin et la pièce 22 est une canalisation.

Le dispositif 10 comporte une zone souple 12 et, solidarisé à la zone souple 12, une pluralité de rangées de patins 14 plus rigides que la zone souple.

Comme on le voit sur la figure 1, la pièce 22, ici une canalisation telle qu'un pipeline, est en appui sur une seule rangée de patins, de manière à ce que la surface d'appui de la canalisation sur le support 20 soit la plus grande possible. Toutefois, les autres rangées de patins de part et d'autre sont nécessaires dans la mesure où, en cas de dégradation de la rangée d'appui, ces rangées seront utiles pour toujours assurer le support de la canalisation.

La figure 2 illustre un un mode de réalisation 10 du dispositif de protection de pièces mécaniques objet de la présente invention comportant une zone souple 12 et, plusieurs rangées de patins 14 plus rigides que la zone souple, chaque rangée de patins étant composée de plusieurs patins, par exemple les patins 14-1, 14-2 et 14-3.

Bien qu'un patin d'une seule pièce pourrait être utilisé dans le cadre de l'invention, le fait d'avoir divisé chaque rangée de patins en plusieurs patins présente une grande utilité. En effet, au fur et à mesure du temps, il y a dégradation de la surface de la canalisation 22. En conséquence, la surface extérieure de la canalisation présente des creux où le métal est parti, et des bosses dues à l'oxydation. La canalisation n'étant plus rectiligne, le fait d'avoir plusieurs patins permet à la rangée d'épouser les irrégularités de la surface de la canalisation au cours du temps.

Selon des modes de réalisation particuliers de l'invention, les patins tels que les patins 14-1, 14-2, 14-3 illustrés sur la figure 2, sont de forme rectangulaire et notamment de forme carrée. De préférence, l'épaisseur des patins est comprise entre 5 mm et 10 mm, et la largeur des patins est de 20 mm à 30 mm et leur longueur comprise entre 10 mm et 30 mm. L'intervalle entre deux patins peut être compris entre la moitié de leur longueur et une fois leur largeur. Ainsi, avec des patins de 30 mm de longueur, l'intervalle entre deux patins sera compris entre 15 mm et 30 mm.

A noter que la hauteur des patins et l'écartement entre chaque patin sont tels qu'en aucun cas, la canalisation 22 touchera le support au travers de la zone souple.

La souplesse de la zone souple permet un mouvement relatif des patins entre eux et, pour l'ensemble du dispositif 10, de longer la surface d'une pièce mécanique à protéger.

La zone souple 12 peut être en matière élastique. Préférentiellement, la zone souple 12 comporte au moins une couche tissée. Une couche tissée présente l'avantage d'une grande homogénéité et de la résistance propres aux tissus.

Les patins 14-1, 14-2, 14-3 sont rigides sans être cassants. Préférentiellement, les patins comportent une matière plastique, et/ou un métal non ferreux, par exemple du bronze. Leur rigidité est ainsi très élevée. La matière plastique assure une isolation électrique, voire thermique et une absorption de différentes vibrations entre les pièces. Le métal non ferreux, par exemple du bronze, n'est pas soumis à la corrosion.

Avantageusement, chaque patin comprend un matériau plastique ou résineux chargé en un matériau apte à limiter l'abrasion. Ainsi, la tenue en friction du patin est améliorée par la charge en matériau apte à limiter l'abrasion. Les patins sont progressivement polis, ce qui favorise le glissement de la canalisation sur le support. Avantageusement, chaque patin est obtenu par pultrusion, extrusion, multi extrusion ou injection. Ainsi, les patins sont aisément produits, avec notamment une section aux parois de différentes épaisseur de manière à créer des sections variées et avec la capacité de prévoir, dans la même section, différents matériaux, par exemple rigide pour l'abrasion et souple pour l'absorption des vibrations.

Pour fabriquer le dispositif 10, la zone souple 12 peut comporter un maillage, un tressage ou un tissage, qui est mis en contact avec chaque patin 14 pendant une étape de moulage de chaque patin 14. Dans d'autres modes de fabrication, chaque patin 14 est fixé encore liquide sur la zone souple de telle sorte que la zone souple 12 s'imprègne du matériau du patin 14. Ainsi, le patin 14 et la zone souple 12 sont particulièrement solidaires.

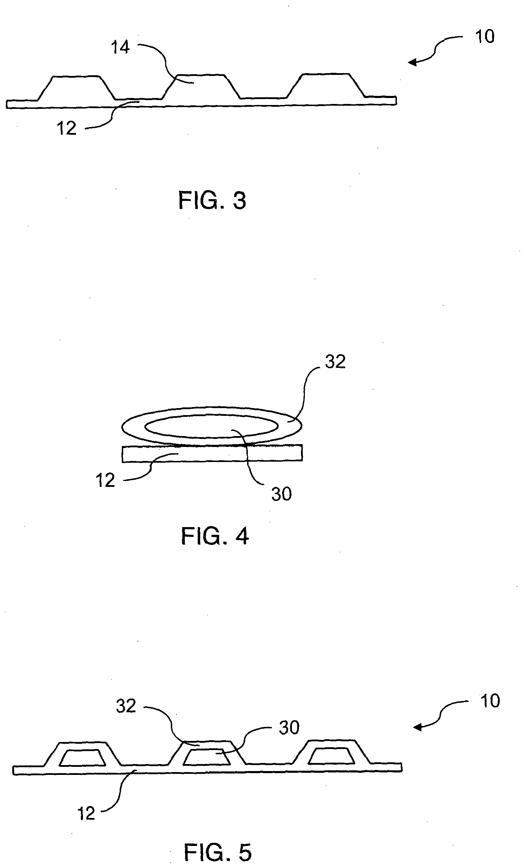

Dans des dispositifs hors du cadre de l'invention, la zone souple 12 et les patins 14 sont faits de la même matière, comme illustré en figure 3. Ce bloc en une seule matière peut être mis en forme pour constituer la zone souple et les patins, par usinage, moulage, injection ou extrusion, par exemple. Ces modes de réalisation présentent l'avantage de présenter des coûts de fabrication très faibles, du fait de leur fabrication, notamment lorsqu'elle est effectuée par extrusion ou pultrusion.

Dans des modes de réalisation, chaque patin 14 est collé ou soudé sur la zone souple 12.

Conformément à l'invention, comme illustré sur les figures 4 et 5, le patin est réalisé en deux matières dont l'une entoure l'autre pour assurer un meilleur contact avec les pièces à protéger ainsi qu'une meilleure capacité d'absorption de certaines vibrations et de chocs. De plus, le matériau le plus souple 30, par exemple en caoutchouc est entouré par le matériau le plus rigide 32 par exemple en Polysulfure de phénylène (P.P.S.).

Préférentiellement, au cours de la fabrication du dispositif 10, on réalise une bande de matériau enroulé en bobine. Ensuite, le dispositif 10 est obtenu par découpe d'une bande ainsi fabriquée, à la dimension correspondant à la canalisation et au support à protéger.

Pour mettre en oeuvre le dispositif objet de la présente invention, on réalise le procédé suivant appliqué à la protection d'une canalisation 22 en appui sur un support 20 :
- une étape de découpe un rouleau décrit ci-dessus entre deux patins pour former un dispositif de protection 10. La dimension du dispositif de protection 10 dépend des pièces à protéger. L'épaisseur et la longueur des patins 14 dépendent de la pression exercée par la canalisation et des glissements attendus. Pour répondre à l'ensemble des besoins pour des canalisations dont le diamètre va de deux à cinquante six pouces, soit 5 à 140 centimètres, environ, deux ou trois types de patin sont envisagés.
- une étape de soulèvement du tuyau 22, selon des techniques connues,
- une étape de préparation de surface d'au moins une dite pièce, par exemple du tuyau 22, par exemple par grenaillage et dégraissage,
- une étape d'imprégnation de la surface préparée et/ou de la zone souple 12 du dispositif 10, par exemple avec de la colle, par exemple de type résine polymérisable configurée pour durcir sous l'effet de rayonnement, de chaleur ou d'une réaction chimique entre composants
- une étape de positionnement de telle manière à ce qu'au moins toute la surface de contact d'un des patins soit parallèle à la face du support destiné à recevoir la canalisation, et
- une étape de pressage de la zone 12 sur la colle et sur la surface de la pièce préparée, par exemple par cerclage avec au moins une sangle tendue autour du dispositif 10 et du tuyau 22 qui le porte. La colle durcit alors et colle le dispositif 10 sur le tuyau 22.

Bien entendu, les deux surfaces en contact peuvent faire l'objet d'une protection séparée.
- une étape de pose du tuyau 22, selon des techniques connues

Comme on le comprend à la lecture de la description qui précède, en solidarisant la zone souple à l'une des pièces, on dispose une protection mécanique entre les pièces à protéger. Le dispositif objet de la présente invention assure aussi une absorption des vibrations mécaniques entre les pièces protégées. De plus, pour différents diamètres de tuyaux, le même dispositif de protection peut être utilisé, ce qui réduit aussi les besoins de stockage et de magasinage.

La souplesse du dispositif, au moins dans une direction, limite le besoin de traitement de la surface des pièces. Le dispositif objet de la présente invention limite ainsi la corrosion entre les pièces protégées. De plus, on peut aisément prévoir des dispositifs qui sont adaptés à différents diamètres ou tailles de pièces à protéger.

Le dispositif objet de la présente invention ne s'applique pas qu'à des tuyaux. Il s'applique à tous les cas où des pièces mécaniques sont en contact et que l'on souhaite protéger au moins l'une de ces pièces, par exemple de la corrosion, des vibrations, des chocs, ou d'une réaction avec un matériau composant l'autre pièce.

## Revendications

1. Dispositif (10) de protection contre la dégradation, notamment la corrosion d'une pièce mécanique (22), en appui sur un support (20), le dispositif comprenant une zone souple (12) adaptée pour être en contact direct avec la pièce mécanique et, solidarisés à ladite zone souple, au moins une rangée de patins rectilignes (14) adaptée pour être en contact direct avec le support, ladite rangée comportant une pluralité de patins (14-1, 14-2, 14-3) ;
- lesdits patins étant plus rigides que ladite zone souple, la souplesse permettant un mouvement relatif des patins entre eux, le dispositif étant **caractérisé en ce que**
- au moins une partie de la pluralité de patins (14) comporte deux matériaux combinés, l'un desdits matériaux étant plus souple que l'autre, le matériau le plus souple étant entouré par le matériau le plus rigide.

2. Dispositif selon la revendication 1 dans lequel ladite zone souple (12) comporte au moins une couche tissée.

3. Dispositif (10) de protection selon l'une des revendications 1 à 2, dans lequel au moins une partie de la pluralité de patins (14) est en matière plastique.

4. Dispositif selon l'une des revendications 1 à 3, dans lequel au moins une partie de la pluralité de patins (14) est en métal non ferreux.

5. Dispositif selon la revendication 4, dans lequel le métal non ferreux comporte du bronze.

6. Dispositif selon l'une des revendications 1 à 5, dans lequel lesdits patins (14) sont discontinus.

## Patentansprüche

1. Vorrichtung (10) zum Schutz vor Verschlechterung, insbesondere Korrosion, eines mechanischen Teils (22), das auf einem Träger (20) aufliegt, wobei die Vorrichtung eine flexible Zone (12) umfasst, die dazu vorgesehen ist, in direktem Kontakt mit dem mechanischen Teil zu sein, und verbunden mit der flexiblen Zone, mindestens eine Reihe von geradlinigen Backen (14), die dazu vorgesehen sind, mit dem Träger in direktem Kontakt zu sein, wobei die Reihe eine Vielzahl von Backen (14-1, 14-2, 14-3) umfasst:
- wobei die Backen steifer als die flexible Zone sind, wobei die Flexibilität eine relative Bewegung der Backen zueinander ermöglicht,
wobei die Vorrichtung **dadurch gekennzeichnet ist, dass**
- mindestens ein Teil der Vielzahl von Backen (14) zwei kombinierte Materialien umfasst, wobei eines der Materialien flexibler als das andere ist, wobei das flexibelste Material von dem steifsten Material umgeben ist.

2. Vorrichtung nach Anspruch 1, bei der die flexible Zone (12) mindestens eine Gewebeschicht umfasst.

3. Schutzvorrichtung (10) nach einem der Ansprüche 1 bis 2, bei der mindestens ein Teil der Vielzahl von Backen (14) aus Kunststoff ist.

4. Vorrichtung nach einem der Ansprüche 1 bis 3, bei der mindestens ein Teil der Vielzahl von Backen (14) aus nicht Nichteisenmetall ist.

5. Vorrichtung nach Anspruch 4, bei der das Nichteisenmetall Bronze umfasst.

6. Vorrichtung nach einem der Ansprüche 1 bis 5, bei dem die Backen (14) nicht durchgehend sind.

## Claims

1. Protection device (10) protecting against degradation, notably against corrosion, a mechanical part (22) resting on a support (20), the device comprising a flexible zone (12) designed to be in direct contact with the mechanical part and, secured to the said flexible zone, at least one row of rectilinear pads (14), which row is designed to be in direct contact with the support, the said row comprising a plurality of pads (14-1, 14-2, 14-3); the said pads being more rigid than the said flexible zone, the flexibility allowing relative movement of the pads with respect to one another, the device being **characterized in that** at least a part of the plurality of pads (14) comprises two materials combined, one of the said materials being more flexible than the other, the more flexible material being surrounded by the more rigid material.

2. Device according to Claim 1, in which the said flexible zone (12) comprises at least one woven layer.

3. Protection device (10) according to one of Claims 1 and 2, in which at least a part of the plurality of pads (14) is made of plastic.

4. Device according to one of Claims 1 to 3, in which at least a part of the plurality of pads (14) is made of a non-ferrous metal.

5. Device according to Claim 4, in which the non-ferrous metal contains bronze.

6. Device according to one of Claims 1 to 5, in which the said pads (14) are discontinuous.
